# EUROPEAN PATENT SPECIFICATION

(11) **EP 2 975 082 B1**
(45) Date of publication and mention of the grant of the patent: **13.02.2019**
(21) Application number: 15172676.7
(22) Date of filing: 18.06.2015
(51) Int. Cl.: C08K 3/34, C08K 3/26, C08K 3/36, C08K 5/5435, C08K 5/548, C08K 5/56

(54) **MEDICAL RUBBER PART**
MEDIZINISCHES GUMMITEIL
PIÈCES MÉDICALES EN CAOUTCHOUC

(30) Priority: 16.07.2014 JP 2014146025
(43) Date of publication of application: 20.01.2016
(73) Proprietor: SUMITOMO RUBBER INDUSTRIES, LTD., Kobe-shi, Hyogo-ken, 651-0072 (JP)
(72) Inventor: MAEDA, Katsushi, Kobe-shi,, Hyogo 651-0072 (JP); MASUYAMA, Yoshikazu, Kobe-shi,, Hyogo 651-0072 (JP)
(74) Representative: Manitz Finsterwald Patentanwälte PartmbB

(56) References cited:
- EP-A1- 1 547 633
- WO-A1-2007/062669
- US-A1- 2005 137 533
- DATABASE CA [Online] CHEMICAL ABSTRACTS SERVICE, COLUMBUS, OHIO, US; 18 April 2014 (2014-04-18), HUANG, LEI ET AL: "Automobile wire harness thermoplastic polyester elastomer heat shrinkable bushing tube and preparation method and application thereof", XP002751742, retrieved from STN Database accession no. 2014:627572 -& CN 103 724 946 A (GUANGZHOU KAIHENG K & S CO LTD) 16 April 2014 (2014-04-16)
- DATABASE CA [Online] CHEMICAL ABSTRACTS SERVICE, COLUMBUS, OHIO, US; 5 November 2009 (2009-11-05), NISHIKAWA, YUSUKE ET AL: "Silica-dispersed rubber blend compositions, and their vibration dampers, and manufacture of the compositions", XP002751743, retrieved from STN Database accession no. 2009:1357966 -& JP 2009 256580 A (TOKAI RUBBER IND LTD) 5 November 2009 (2009-11-05)

## Description

### {Field of the Invention}

The present invention relates to a medical rubber part of any of various types such as rubber closures and sealing members of containers for various medical drugs, such as liquid preparations, powder preparations, lyophilized preparations, etc., sliding or sealing parts of gaskets or nozzle caps for prefilled syringes.

### {Background Art}

Butyl based rubbers, such as butyl rubbers and halogenated butyl rubbers are capable of forming crosslinked products that excel in chemical resistance, water resistance, gas permeation resistance against oxygen and other various gases in comparison to other synthetic rubbers, and are therefore used favorably as forming materials of the various types of medical rubber parts mentioned above.

A medical rubber part constituted of a crosslinked product of a butyl based rubber is manufactured by blending the butyl based rubber as a rubber component with a crosslinking component that crosslinks the butyl based rubber and any of various additives, such as a reinforcing agent, such as silica and a filler, to prepare a rubber composition and molding and crosslinking the rubber composition to a prescribed shape (refer, for example, to Patent Document 1: Japanese Patent Application Publication No. 8-27333, Patent Document 2: Japanese Patent Application Publication No. 10-179690, Patent Document 3: Japanese Patent Application Publication No. 2002-301133, and Patent Document 4: Japanese Patent Application Publication No. 2004-24384).

As the silica, for example, ordinary silica with a BET specific surface area of approximately 70 to 230m²/g and a bulk specific gravity of approximately 30 to 120g/liter is used.

EP 1 574 633 A1 relates to a piston for a syringe for sealing an injection barrel filled with a medicament. A rubber composition for such a piston may include 100 parts by weight of chlorinated butyl rubber and 30 phr of wet process hydrous silica.

US 2005/0137533 A1 discloses a piston for a syringe, which may be manufactured from a rubber composition including 100 parts by weight of butyl rubber and 35 phr of wet process hydrosilica.

### {Brief Summary of the Invention}

However, according to examination by the inventor, a medical rubber part constituted of the conventional rubber composition described above has the problems of
(1) readily absorbing and being readily permeated by moisture and
(2) being high in compression set.

Generally, a medical rubber part is, for example, subject to processes of cleaning, sterilization, drying, and packaging upon being manufactured by a manufacturer, thereafter delivered to a pharmaceutical manufacturer whereupon it is subject again to processes of sterilization and drying by the pharmaceutical manufacturer, and then put to use in the various applications mentioned above.

However, a medical rubber part constituted of the conventional rubber composition contains a comparatively large amount of moisture even after the drying processes and is also readily permeated by moisture, and therefore, for example, with a rubber closure of a container for a medical drug, after sealing of the container, moisture contained in the rubber closure is readily released into the container and external moisture readily permeates into the container through the rubber closure, and contact with such moisture may adversely affect the quality of the preparation contained in the container.

In particular, with a rubber closure for vial (container for injectable preparation), moisture permeates readily into the interior through a pierceable flange portion of thin thickness during long-term storage and therefore, especially with a lyophilized injectable preparation or a powder injectable preparation, there is a problem of hydrolysis and deactivation occurring readily due to the permeated moisture.

Also, many medical rubber parts are generally colored in grey by titanium oxide and minute amounts of carbon black, and there is a problem that a surface in contact with a liquid preparation swells readily or is readily discolored to be lighter than the original color due to absorption of moisture.

Also, the rubber closure for vial is required to be such that, when an injection needle is pierced through the pierceable flange portion and then removed after intake of the internal preparation into a syringe barrel, the needle hole is closed at substantially the same time as the needle removal and the sealed state is recovered immediately. A material, with which a cut width in the process of piercing is small and with which the needle hole is closed immediately in the process of needle removal, is thus necessary.

However, basically a crosslinked product of a butyl based rubber has low resilience characteristics and, as described above, the rubber closure constituted of the conventional rubber composition that contains such butyl based rubber is high in compression set, and there is thus a problem that the needle hole is not closed rapidly in the process of needle removal and leakage occurs readily, especially with a liquid preparation.

Especially with a laminated rubber closure, in which a resin film is laminated and made integral, the resin film obstructs the restoration of the rubber and liquid leakage tends to be large.

These problems also occur readily, for example, in a rubber closure of an infusion preparation container when a needle is removed after the end of drip infusion.

Although increase of thickness of the pierceable flange portion may be considered to prevent the leakage of the liquid preparation, the needle piercing resistance increases in this case and therefore this cannot be said to be the best solution.

Also, even if, for example, a film of a fluororesin, such, as PTFE, and ETFE is laminated on the pierceable flange portion or a leg portion of the rubber closure, the permeation of moisture cannot be prevented.

A prefilled syringe has its syringe barrel filled with a liquid preparation, is fitted with a gasket, and is stored in a sterilized state until use.

With the gasket of the prefilled syringe, the diameter of an annular projecting seal portion is designed to be approximately 2 to 5% larger than the inner diameter of the syringe barrel to secure high airtightness and liquid-tightness and an appropriate sliding property.

However, as described above, a gasket constituted of the conventional rubber composition is high in compression set, and there is thus a problem that the annular projecting seal portion becomes reduced in diameter, for example, in the process of steam sterilization or during storage and is thereby degraded in sealing property and gives rise to liquid leakage readily. This problem is difficult to resolve by just a change of shape design.

An object of the present invention is to provide a medical rubber part, which, while being constituted of a rubber composition containing a butyl based rubber as a rubber component, is less likely to absorb and be permeated by moisture than the conventional art and is low in compression set.

The present invention provides a medical rubber part constituted of a rubber composition including at least one type of rubber component, selected from the group consisting of butyl rubbers and halogenated butyl rubbers, and not less than 3 parts by mass and not more than 50 parts by mass, with respect to 100 parts by mass of the total amount of the rubber component, of silica with a BET specific surface area of not less than 1m²/g and not more than 60m²/g and a bulk specific gravity of not less than 30g/liter and not more than 130g/liter.

### {Advantageous Effects of the Invention}

According to examination by the inventor, a cause as to why the conventional medical rubber part readily absorbs and is readily permeated by moisture and is high in compression set is that, as described above, silica with a porous structure and large specific surface area such that the BET specific surface area is approximately 70 to 230m²/g and the bulk specific gravity is approximately 30 to 120g/liter is used as the silica.

That is, the conventional silica inherently holds a large amount of crystal water and is also high in the density of hydroxyl groups on the silica surface, and therefore when it is blended at a proportion of not less than 10 parts by mass with respect to 100 parts by mass of the total amount of the rubber component to secure a sufficient reinforcing effect, the surface of the medical rubber part increases in hydrophilicity so that the medical rubber part readily absorbs and is readily permeated by moisture.

Although the problems can be suppressed to some degree by blending a natural or synthetic hydrotalcite or coupling agent, this does not provide a fundamental solution.

Also, the conventional silica readily undergoes deterioration of dispersion due to secondary aggregation and is high in rate of scattering loss during kneading. A sufficient reinforcing effect thus cannot be obtained, and consequently, a medical rubber part that contains the conventional silica is made high in compression set. Also, the kneading yield is low and this causes the problem of degradation of productivity of the rubber composition and consequently the medical rubber part.

On the other hand, the silica, used in the present invention and having the BET specific surface area of not less than 1m²/g and not more than 60m²/g and the bulk specific gravity of not less than 30g/liter and not more than 130g/liter, does not hold a large amount of crystal water as the conventional silica does and is also low in the density of hydroxyl groups so that the surface of the medical rubber part can be maintained at a low level of hydrophilicity and made unlikely to absorb and be permeated by moisture.

Therefore, for example, the merit that a drying time after steam sterilization at a pharmaceutical manufacturer can be shortened is provided.

Also, the silica is approximately equivalent to the conventional silica in the property of reinforcing the butyl based rubber and yet is unlikely to undergo deterioration of dispersion due to secondary aggregation, is low in the rate of scattering loss during kneading, and can thus express a sufficient reinforcing effect by addition of the prescribed amount and consequently enable a medical rubber part of low compression set to be obtained. Also, the kneading yield is high and therefore the productivities of the rubber composition and the medical rubber part are improved.

A medical rubber part, which, while being constituted of a rubber composition containing a butyl based rubber as a rubber component, is less likely to absorb and be permeated by moisture than the conventional art, is low in compression set, and is moreover excellent in productivity, can thus be obtained by the present invention.

### {Description of Embodiments}

A medical rubber part according to the present invention is characterized in being of constituted of a rubber composition including at least one type of rubber component, selected from the group consisting of butyl rubbers and halogenated butyl rubbers, and not less than 3 parts by mass and not more than 50 parts by mass, with respect to 100 parts by mass of the total amount of the rubber component, of silica with a BET specific surface area of not less than 1m²/g and not more than 60m²/g and a bulk specific gravity of not less than 30g/liter and not more than 130g/liter.

With the medical rubber part according to the present invention, the surface thereof can be maintained at a low level of hydrophilicity and made unlikely to absorb and be permeated by moisture by blending the prescribed amount of the specified silica.

Therefore, for example, with a rubber closure for vial, the amount of moisture contained after cleaning, sterilization, and drying is low and permeation of moisture into the interior through a pierceable flange portion during long-term storage can be suppressed to enable prevention of hydrolysis and deactivation of a lyophilized injectable preparation or a powder injectable preparation contained in the interior. Also, the medical rubber part can be prevented from swelling or becoming discolored to be lighter than the original color due to absorption of moisture by a surface in contact with a liquid preparation.

Also, the silica is unlikely to undergo deterioration of dispersion due to secondary aggregation and is low in the rate of scattering loss during kneading, and therefore by blending the prescribed amount of the silica, a sufficient reinforcing effect can be expressed and a medical rubber part of low compression set can be obtained.

Therefore, for example with a rubber closure for vial or infusion preparation container, the cut width in the process of piercing is small and a needle hole is closed rapidly in the process of needle extraction so that even if the thickness of the pierceable flange portion is not thickened to prevent increase of piercing resistance or even if a resin film is made integral, the needle hole is closed substantially simultaneously with needle extraction to immediately restore the sealed state and reliably prevent liquid leakage in the process of needle extraction.

Also, with a gasket for prefilled syringe, the causing of liquid leakage due to degradation of sealing property of an annular projecting seal portion during storage can be prevented and high airtightness and liquid-tightness and an appropriate sliding property can be maintained over a long term.

Moreover, the silica is high in kneading yield and enables the medical rubber part according to the present invention that is excellent in various characteristics as described above to be manufactured with high productivity.

### <<Rubber composition>>

### <Rubber component>

As the rubber component, at least one type selected from the group consisting of butyl rubbers and halogenated butyl rubbers can be cited.

Of these, one type or two or more types among various butyl rubbers that are copolymers of isobutylene and isoprene may be used as the butyl rubber.

As a specific example of the butyl rubber, one type or two or more types among Butyl 268 [stabilizer: NS, degree of unsaturation: 1.5 mol%, Mooney viscosity: 51ML₁₊₈ (125°C), specific gravity: 0.92] and Butyl 365 [stabilizer: NS, degree of unsaturation: 2.0 mol%, Mooney viscosity: 33ML₁₊₈ (125°C), specific gravity: 0.92] manufactured by Japan Butyl Co., Ltd., LANXESS (registered trademark) X_BUTYL 301 manufactured by LANXESS AG can be cited.

Also, as the halogenated butyl rubber, one type or two or more types among chlorinated butyl rubber, brominated butyl rubber, halogenated copolymers of isobutylene and p-methylstyrene, can be cited.

As a specific example of the chlorinated butyl rubber, at least one type among CHLOROBUTYL 1066 [stabilizer: NS, halogen content: 1.26%, Mooney viscosity: 38ML₁₊₈ (125°C), specific gravity: 0.92] manufactured by Japan Butyl Co., Ltd., LANXESS X_BUTYL CB1240 manufactured by LANXESS AG
can be cited.

Also, as a specific example of the brominated butyl rubber, at least one type among BROMOBUTYL 2255 [stabilizer: NS, halogen content: 2.0%, Mooney viscosity: 46ML₁₊₈ (125°C), specific gravity: 0.93] manufactured by Japan Butyl Co., Ltd., LANXESS X_BUTYL BBX2 manufactured by LANXESS AG can be cited.

Further, as an example of the halogenated copolymer of isobutylene and p-methylstyrene, Exxpro (registered trademark) 3035 manufactured by Exxon Mobile Corporation, can be cited.

### <Silica>

As the silica, silica with a BET specific surface area of not less than 1m²/g and not more than 60m²/g and a bulk specific gravity of not less than 30g/liter and not more than 130g/liter is used restrictively as described above.

The surface of the medical rubber part can thereby be maintained at a low level of hydrophilicity and made unlikely to absorb and be permeated by moisture and a sufficient reinforcing effect can be expressed to enable a medical rubber part of low compression set to be obtained.

The BET specific surface area of the silica is restricted to not less than 1m²/g because with pulverized and classified silica with a BET specific surface area less than 1m²/g, the particle diameter is large and a sufficient reinforcing property cannot be obtained.

On the other hand, the BET specific surface area of the silica is restricted to not more than 60m²/g because when silica with a BET specific surface area exceeding the above range is used, the surface of the medical rubber part is made high in hydrophilicity so as to absorb and be permeated by moisture readily as mentioned above, and such silica readily undergoes deterioration of dispersion due to secondary aggregation and is high in rate of scattering loss during kneading so that a medical rubber part of low compression set cannot be manufactured at a high kneading yield and with good productivity.

Also, the bulk specific gravity of the silica is restricted to not less than 30g/liter because a sufficient reinforcing property cannot be obtained with silica of large particle diameter with a bulk specific gravity less than 30g/liter.

Further, the bulk specific gravity of the silica is restricted to not more than 130g/liter because compression set is degraded and water resistance is degraded when silica with a bulk specific gravity exceeding 130g/liter is used.

As the silica, any silica from among synthetic silica synthesized by any of various synthesis methods and natural silica having a natural mineral as raw material that satisfies the range of BET specific surface area and the range of bulk specific gravity may be used.

The following various types of silica can be cited as specific examples of silica that satisfies both ranges.

### (Synthetic silica)

As an example of the synthetic silica, Nipsil (registered trademark) EL [wet process (precipitated) silica, BET specific surface area: 30 to 60m²/g, bulk specific gravity: 80 to 130g/liter] manufactured by Tosoh Silica Corporation, can be cited.

### (Natural silica)

As an example of the natural silica, one type or two or more types among MIN-U-SIL (registered trademark) 5 [BET specific surface area: 2.06m²/g, bulk specific gravity: 30g/liter], 10, 15, and 30 manufactured by U.S. Silica, IMSIL (registered trademark) A-8, A-10, A-15, A-25, and A-108 manufactured by UNIMIN Corporation, CRYSTALITE (registered trademark) A-A, VX-S, VX-S2, andVX-SRmanufacturedbyTatsumori Ltd. can be cited.

### (Blending proportion)

The blending proportion of the silica is restricted to 3 parts by mass and not more than 50 parts by mass, with respect to 100 parts by mass of the total amount of the rubber component as mentioned above.

If the blending proportion of the silica is below this range, the reinforcing effect of the silica is insufficient and a medical rubber part of low compression set cannot be obtained.

On the other hand, if the blending proportion of the silica exceeds the above range, there is a problem that the rubber composition before crosslinking increases in viscosity and degrades in molding property (flowing of the rubber composition at the molding pressure becomes difficult).

Also if the blending proportion of the silica exceeds the above range, there is a problem that the number of particles dislodging from the surface of the medical rubber part increases.

In a case where just the silica is blended without using clay or other filler in combination, even if the blending proportion is within the above range, the hardness, strength, or gas permeation resistance of the medical rubber part tends to degrade if the blending proportion is less than 10 parts by mass. This tendency is significant especially with silica (such as natural silica) of relatively large particle diameter with a BET specific surface area of less than 30m²/g or a bulk specific gravity of less than 80g/liter.

Therefore, if just the silica is to be blended, it is preferable, even in the above range, for the blending proportion to be set to not less than 10 parts by mass with respect to 100 parts by mass of the total amount of the rubber component.

If clay or other filler is used in combination with the silica, the blending proportion of the silica may be set to less than 10 parts by mass. In this case, the combined use enables the above-described effects due to the use of the specific silica to be expressed satisfactorily while securing satisfactory hardness, strength and gas permeation resistance.

However, in a system using the silica in combination with another filler, if the total blending proportion exceeds 60 parts by mass, the problem of increase of the number of particles dislodging from the surface of the medical rubber part may still occur. Therefore if the silica is to be used in combination with another filler, the total blending proportion is preferably set to not less than 60 parts by mass with respect to 100 parts by mass of the total amount of the rubber component.

### <Crosslinking component>

A crosslinking component that crosslinks the rubber component is blended in the rubber composition. As the crosslinking component, a crosslinking agent, an accelerator, a crosslinking assistant and (crosslinking activator) can be cited.

Butyl rubbers, chlorinated butyl rubbers, and brominated butyl rubbers respectively differ in crosslinking mechanism, and it is thus preferable to select and use a crosslinking component that is optimal for crosslinking.

For example, if a butyl rubber is used alone or a butyl rubber and a chlorinated butyl rubber are used in combination as the rubber components, it is preferable to use, for example, a resin crosslinking agent, a dithiocarbamic acid salt based accelerator, a thiuram based accelerator, and a crosslinking assistant in combination as the crosslinking components.

As an example of the resin crosslinking agent among the above, one type or two or more types among alkylphenol disulfides and oligomers thereof, alkylphenol formaldehyde resins, thermosetting phenol resins, phenol dialcohol based resins, bisphenol resins, and
thermosetting bromomethyl-alkylated phenol resins can be cited.

As the accelerator, that which does not form a nitrosamine is preferable.

As an example of the dithiocarbamic acid salt accelerator, zinc dibenzyldithiocarbamate (ZTC) can be cited.

As an example of the thiuram based accelerator, at least one type among tetrakis (2-ethylhexyl) thiuram disulfide (TOT-N) and
tetrabenzyl thiuram disulfide (TBZTD), can be cited.

Further, as examples of the crosslinking assistant, zinc oxide (zinc white) and magnesium oxide can be cited.

Also, if a chlorinated butyl rubber is used alone as the rubber component, for example, a triazine derivative based crosslinking agent is blended as the crosslinking component.

As an example of the triazine derivative based crosslinking agent, one type or two or more types among 6-[bis(2-ethylhexyl)amino]-1,3,5-triazine-2,4-dithiol, 6-diisobutylamino-1,3,5-triazine-2,4-dithiol, 6-dibutylamino-1,3,5-triazine-2,4-dithiol, 6-dibutylamino-1,3,5-triazine-2,4-dithiol monosodium, 6-anilino-1,3,5-triazine-2,4-dithiol, and 1,3,5-triazine-2,4,6-trithiol, can be cited.

Further, if a brominated butyl rubber is used alone as the rubber component, for example, a sulfur based crosslinking agent, such as sulfur and the abovementioned resin crosslinking agent, dithiocarbamic acid salt based accelerator, and thiurambased accelerator are preferably used in combination as the crosslinking components.

The combination and blending proportion of the crosslinking component may be set as suited in accordance with the type and combination of the rubber component and the targeted rubber hardness, of the medical rubber part.

### (Hydrotalcite and coupling agent)

If a natural or synthetic hydrotalcite and/or a coupling agent is blended in the rubber composition, the effect of the surface of the medical rubber part being maintained at a low level of hydrophilicity and made unlikely to absorb and be permeated by moisture can be improved further in combination with the blending of the specific silica described above.

The hydrotalcite also functions as a scorch preventing agent during the crosslinking of a halogenated butyl rubber to prevent increase of the compression set of the medical rubber part.

Further, the hydrotalcite functions as an acid acceptor that absorbs chorine based gas and bromine based gas generated during the crosslinking of the halogenated butyl rubber to prevent the occurrence of crosslinking inhibition, due to such gases. The magnesium oxide mentioned above can also function as an acid acceptor.

On the other hand, the coupling agent, as is well known, improves the compatibility and the reactivity of the silica and the rubber component and also functions to improve the reinforcing effect of the silica. The coupling agent also functions as a crosslinking assistant for a butyl rubber.

It is thus preferable to use the hydrotalcite and the coupling agent in combination, especially if the rubber component is a halogenated butyl rubber. On the other hand, if the rubber component is just a butyl rubber or if the proportion of the butyl rubber is higher than that of the halogenated butyl rubber, the hydrotalcite may be omitted.

As an example of the hydrotalcite, one type or two or more types among Mg-Al based hydrotalcites, such as Mg_{4.5}Al₂(OH)₁₃CO₃•3.5H₂O, Mg_{4.5}Al₂(OH)₁₃CO₃, M₉₄Al₂(OH)₁₂CO₃•3.5H₂O, Mg₆Al₂(OH)₁₆CO₃•4H₂O, Mg₅Al₂(OH)₁₄CO₃•4H₂O, and Mg₃Al₂(OH)₁₀CO_{3•}1.7H₂O, can be cited.

As a specific example of the hydrotalcite, DHT-4A (registered trademark) -2 manufactured by Kyowa Chemical Industry Co., Ltd. can be cited.

The blending proportion of the hydrotalcite with respect to 100 parts by mass of the total amount of the rubber component is not less than 0.2 parts by mass, especially preferably not less than 3 parts by mass, and preferably not more than 5 parts by mass.

If the blending proportion is below this range, the above-described effects of blending in the hydrotalcite may not be obtained sufficiently.

On the other hand, even if the blending proportion of the hydrotalcite exceeds the above range, a further effect cannot be obtained and moreover, the raw material cost may increase.

As an example of the coupling agent, one type or two or more types among silane coupling agents, such as γ-mercaptopropyltrimethoxysilane, γ-methacryloxypropyltrimethoxysilane, γ-glycidoxypropyltrimethoxysilane, and titanate based coupling agents, such as isopropyl triisostearoyl titanate, can be cited.

The blending proportion of the coupling agent with respect to 100 parts by mass of the total amount of the rubber component is preferably not less than 0.2 parts by mass and is not more than 3 parts by mass and especially preferably not more than 1 part by mass.

If the blending proportion is below this range, the above-described effects of blending in the coupling agent may not be obtained sufficiently.

On the other hand, even if the blending proportion of the coupling agent exceeds the above range, a further effect cannot be obtained and moreover, the raw material cost may increase.

### <Filler>

A filler, such as clay and talc may further be blended in the rubber composition. The filler functions to adjust the rubber hardness of the medical rubber part and also functions as an extender to reduce the production cost of the medical rubber part.

Among the above, calcined clay and kaolin clay may be used as the clay, and as a specific example of the clay, one type or two or more types among SILLITIN (registered trademark) Z manufactured by Hoffmann Mineral GmbH, SATINTONE (registered trademark) W manufactured by Engelhard Corporation, NN Kaolin Clay manufactured by Tsuchiya Kaolin Industry, Ltd. , and PoleStar 200R manufactured by Imerys Specialties Japan Co., Ltd. can be cited.

Also as a specific example of the talc, one type or two or more types among High toron A manufactured by Takehara Kagaku Kogyo Co., Ltd., MICRO ACE (registered trademark) K-1 manufactured by Nippon Talc Co., Ltd. and Mistron (registered trademark) Vapor manufactured by Imerys Specialties Japan Co., Ltd. can be cited.

The blending proportion of the filler may be set as suited in accordance with the blending proportion of the silica described above, the type and combination of the rubber component, and the targeted rubber hardness, of the medical rubber part.

However, an inorganic filler, such as clay and talc is poor in dispersion property, contains minute amounts of heavy metals, and therefore preferably not blended in a large amount.

In this case, for example, a powder of an olefin-based resin, a styrene-based elastomer, or an ultrahigh molecular weight polyethylene (UHMWPE) may be blended as the filler.

### <Others>

A colorant, such as the aforementioned titanium oxide, carbon black, a lubricant, such as stearic acid and low density polyethylene (LDPE), an auxiliary processing agent and polyethylene glycol as a crosslinking activator may further be blended at appropriate proportions in the rubber composition.

### <Preparation of rubber composition>

The rubber composition containing the respective components described above may be prepared in the same manner as is done conventionally. That is, if two or more types of rubber components are to be used in combination, these are blended at prescribed proportions and masticated, kneading is then performed upon adding the silica and the various additives besides the crosslinking component, and then lastly, kneading is performed upon adding the crosslinking component to prepare the rubber composition.

The kneading may be performed using, for example, an open roll, a closed kneader, a Banbury mixer,

### <<Medical rubber part>>

Besides using the rubber composition described above, the medical rubber part according to the present invention maybe manufactured in the same manner as is done conventionally.

That is, first, molding to the three-dimensional shape of the prescribed medical rubber part is performed by performing press molding by pressurizing and heating the rubber composition that is sandwiched between an upper mold and a lower mold upon being made to take the form of a ribbon, pellets, or a sheet or by performing injection molding by injecting the rubber composition into a mold.

Press molding using a vacuum press molding machine, is especially preferable. With press molding, for example, so-called multipiece molding can be performed by forming a plurality of the medical rubber parts on a single sheet of the rubber composition to improve the productivity of the medical rubber part.

After the press molding, a process of coating on a silicone-based lubrication coating agent, is performed as necessary and thereafter, the respective processes of appearance inspection, punching out of the individual medical rubber parts from the sheet, cleaning, sterilization, drying, and packaging are performed to manufacture the medical rubber part.

Also with the medical rubber part according to the present invention, a resin film may be laminated and made integral in the same manner as is done conventionally. As examples of the resin film, films of polytetrafluoroethylene (PTFE), tetrafluoroethylene-ethylene copolymer (ETFE), and modified products of these, and films of inert resins, such as ultrahigh molecular weight polyethylene (UHMWPE) can be cited.

The resin film may be integrated to the medical rubber part formed after press molding, for example, by performing press molding in a state where the resin film is overlapped onto the rubber composition that has been formed to a sheet.

The arrangement of the present invention may be applied to various medical rubber parts that are formed from the conventional rubber composition constituted of butyl based rubber.

That is, as examples of the medical rubber part according to the present invention, rubber closures and sealing members of containers for various medical drugs, such as liquid preparations, powder preparations, lyophilized preparations, sliding or sealing parts of gaskets or nozzle caps for prefilled syringes can be cited.

Among these, rubber closures and sealing members, including those for vials and transfusion preparation containers, have a rubber hardness, as expressed as a durometer type A hardness (Shore A hardness) measured in accordance with the measurement method cited in the Japanese Industrial Standards JIS K6253-3_{:2012} "Rubber, vulcanized or thermoplastic - Determination of hardness - Part 3: Durometer method," of preferably not less than 35 and preferably not more than 60.

Also, the Shore A hardness of a sliding or sealing part of a gasket or nozzle cap for a prefilled syringe is preferably not less than 40 and preferably not more than 70.

As described above, the rubber hardness of the medical rubber part can be adjusted by changing the combination and blending proportion of the crosslinking component, the blending proportion of the silica as a reinforcing agent, the blending proportion of the filler.

The blending proportion of the silica is an especially important element for adjusting the rubber hardness . However, the BET specific surface area and the bulk specific gravity of the silica used also act, together with the blending proportion, as elements for adjusting the rubber hardness.

That is, silica having a greater BET specific surface area and a greater bulk specific gravity within the ranges described above is higher in the reinforcing effect and enables the medical rubber part of the same rubber hardness to be formed with a lower amount of blending.

It is therefore preferable to appropriately change the blending proportion of the silica within the range described above in accordance with the targeted rubber hardness of the medical rubber part and the BET specific surface area and the bulk specific gravity of the silica used.

### [Examples]

### <Example 1>

### (Preparation of rubber composition)

As the rubber components, 70 parts by mass of butyl rubber [Butyl 268 manufactured by Japan Butyl Co., Ltd.] and 30 parts by mass of chlorinated butyl rubber [CHLOROBUTYL 1066 manufactured by Japan Butyl Co., Ltd.] were used.

Also as the silica, synthetic silica [Nipsil EL manufactured by Tosoh Silica Corporation, wet process (precipitated) silica, BET specific surface area: 30 to 60m²/g, bulk specific gravity: 80 to 130g/liter] and natural silica [MIN-U-SIL5 manufactured by U.S. Silica, BET specific surface area: 2.06m²/g, bulk specific gravity: 30g/liter] were used in combination.

The total blending proportion of the silica with respect to 100 parts by mass of the total amount of the two types of rubber components was set to 35 parts by mass with the blending proportion of the synthetic silica being 15 parts by mass and that of the natural silica being 20 parts by mass.

The respective components mentioned above and the respective components shown below in Table 1 besides the crosslinking components were blended, kneaded using a 10L closed pressurizing kneader at a filling rate of 75%, matured at room temperature, and thereafter kneaded by an open roll upon addition of the crosslinking components to prepare a rubber composition.

### [Table 1]

**Table 1**

| Component | Part by mass |
|---|---|
| LDPE | 1 |
| Coupling agent | 0.5 |
| Resin crosslinking agent | 1.5 |
| Accelerator TOT-N | 1.5 |
| Accelerator ZTC | 0.5 |
| Zinc oxide | 3 |

The respective components in the table are as follows. Also, the parts by mass in the table are parts by mass with respect to 100 parts by mass of the total amount of the rubber components.
LDPE: HI-WAX 220P manufactured by Mitsui Chemicals, Inc.
Coupling agent: γ-mercaptopropyltrimethoxysilane
Resin crosslinking agent: oligomer of alkylphenol disulfide [alkylphenol-sulfur chloride condensate, TACKIROL (registered trademark) AP manufactured by Taoka Chemical Co., Ltd.]
Accelerator TOT-N: tetrakis (2-ethylhexyl) thiuram disulfide
Accelerator ZTC: zinc dibenzyldithiocarbamate
Zinc oxide: crosslinking assistant

### (Manufacture of rubber closures)

The rubber composition was molded to the form of a sheet, sandwiched between an upper mold and a lower mold, and vacuum press molded at 180°C for 10 minutes to continuously form, on the single sheet, a plurality of rubber closures for lyophilized injectable preparation vial, each having a flange diameter of 19.0mm, a leg portion diameter of 13.2mm, and a pierceable flange portion thickness of 2.5mm.

Both surfaces of the sheet were then coated with a silicone-based lubricating coating agent and thereafter, the respective processes of appearance inspection, punching out, cleaning, sterilization, drying, and packaging were performed to manufacture the rubber closures.

### <Comparative Example 1>

Besides blending 15 parts by mass of conventional synthetic silica [Nipsil VN3 manufactured by Tosoh Silica Corporation, wet process (precipitated) silica, BET specific surface area: 180 to 230m²/g, bulk specific gravity: 30 to 60g/liter] and 20 parts by mass of calcined clay [SATINTONE (registered trademark) W manufactured by Engelhard Corporation] in place of the two types of silica mentioned above, a rubber composition was prepared in the same manner as in Example 1 and besides using this rubber composition, rubber closures for vial of the same shape and same dimensions were manufactured in the same manner as in Example 1.

### <Example 2>

As the rubber component, 100 parts by mass of chlorinated butyl rubber [CHLOROBUTYL 1066 manufactured by Japan Butyl Co., Ltd.] were used.

Also as the silica, synthetic silica [Nipsil EL manufactured by Tosoh Silica Corporation, wet process (precipitated) silica, BET specific surface area: 30 to 60m²/g, bulk specific gravity: 80 to 130g/liter] was used. The blending proportion of the synthetic silica was set to 25 parts by mass with respect to 100 parts by mass of the chlorinated butyl rubber.

The two components mentioned above and the respective components shown below in Table 2 besides the triazine based crosslinking agent were blended, kneaded using a 10L closed pressurizing kneader at a filling rate of 75%, matured at room temperature, and thereafter kneaded by an open roll upon addition of the triazine based crosslinking agent to prepare a rubber composition.

### [Table 2]

**Table 2**

| Component | Part by mass |
|---|---|
| LDPE | 1 |
| Coupling agent | 0.5 |
| Synthetic hydrotalcite | 4 |
| Triazine based crosslinking agent | 1.5 |

The respective components in the table are as follows. Also, the parts by mass in the table are parts by mass with respect to 100 parts by mass of the chlorinated butyl rubber.
LDPE: HI-WAX 220P manufactured by Mitsui Chemicals, Inc.
Coupling agent: γ-mercaptopropyltrimethoxysilane
Synthetic hydrotalcite: DHT-4A (registered trademark) -2 manufactured by Kyowa Chemical Industry Co., Ltd.
Triazine crosslinking agent: 6-dibutylamino-1,3,5-triazine-2,4-dithiol

Besides using the above rubber composition, rubber closures for vial of the same shape and same dimensions were manufactured in the same manner as in Example 1.

### <Example 3>

Besides using natural silica [MIN-U-SIL5 manufactured by U.S. Silica, BET specific surface area: 2.06m²/g, bulk specific gravity: 30g/liter] as the silica in place of the synthetic silica, a rubber composition was prepared in the same manner as in Example 2 and besides using this rubber composition, rubber closures for vial of the same shape and same dimensions were manufactured in the same manner as in Example 2. The blending proportion of the natural silica was set to 50 parts by mass with respect to 100 parts by mass of the chlorinated butyl rubber.

### <Comparative Example 2>

Besides blending the same amount of the conventional synthetic silica [Nipsil VN3 manufactured by Tosoh Silica Corporation, wet process (precipitated) silica, BET specific surface area: 180 to 230m²/g, bulk specific gravity: 30 to 60g/liter] as the silica in place of the synthetic silica, a rubber composition was prepared in the same manner as in Example 2 and besides using this rubber composition, rubber closures for vial of the same shape and same dimensions were manufactured in the same manner as in Example 2.

### <Example 4>

Besides setting the blending proportion of the synthetic silica to 15 parts by mass with respect to 100 parts by mass of the chlorinated butyl rubber and further blending 20 parts by mass of the calcined clay with respect to 100 parts by mass of the chlorinated butyl rubber, a rubber composition was prepared in the same manner as in Example 2 and besides using this rubber composition, rubber closures for vial of the same shape and same dimensions were manufactured in the same manner as in Example 2. The total blending proportion of the synthetic silica and the calcined clay was 35 parts by mass with respect to 100 parts by mass of the chlorinated butyl rubber.

### <Example 5>

Besides setting the blending proportion of the natural silica to 30 parts by mass with respect to 100 parts by mass of the chlorinated butyl rubber and further blending 20 parts by mass of the calcined clay with respect to 100 parts by mass of the chlorinated butyl rubber, a rubber composition was prepared in the same manner as in Example 3 and besides using this rubber composition, rubber closures for vial of the same shape and same dimensions were manufactured in the same manner as in Example 3. The total blending proportion of the natural silica and the calcined clay was 50 parts by mass with respect to 100 parts by mass of the chlorinated butyl rubber.

### <Example 6>

Besides setting the blending proportion of the synthetic silica to 5 parts by mass with respect to 100 parts by mass of the chlorinated butyl rubber and further blending 20 parts by mass of the calcined clay with respect to 100 parts by mass of the chlorinated butyl rubber, a rubber composition was prepared in the same manner as in Example 2 and besides using this rubber composition, rubber closures for vial of the same shape and same dimensions were manufactured in the same manner as in Example 2. The total blending proportion of the synthetic silica and the calcined clay was 25 parts by mass with respect to 100 parts by mass of the chlorinated butyl rubber.

### <Example 7>

Besides setting the blending proportion of the natural silica to 5 parts by mass with respect to 100 parts by mass of the chlorinated butyl rubber and further blending 20 parts by mass of the calcined clay with respect to 100 parts by mass of the chlorinated butyl rubber, a rubber composition was prepared in the same manner as in Example 3 and besides using this rubber composition, rubber closures for vial of the same shape and same dimensions were manufactured in the same manner as in Example 3. The total blending proportion of the natural silica and the calcined clay was 25 parts by mass with respect to 100 parts by mass of the chlorinated butyl rubber.

### <Comparative Example 3>

Besides setting the blending proportion of the conventional synthetic silica to 15 parts by mass with respect to 100 parts by mass of the chlorinated butyl rubber and further blending 20 parts by mass of the calcined clay with respect to 100 parts by mass of the chlorinated butyl rubber, a rubber composition was prepared in the same manner as in Comparative Example 2 and besides using this rubber composition, rubber closures for vial of the same shape and same dimensions were manufactured in the same manner as in Comparative Example 2.

### <Comparative Example 4>

Besides further blending 35 parts by mass of the natural silica with respect to 100 parts by mass of the chlorinated butyl rubber, a rubber composition was prepared in the same manner as in Example 2 and besides using this rubber composition, rubber closures for vial of the same shape and same dimensions were manufactured in the same manner as in Example 2. The total blending proportion of the two types of silica was 60 parts by mass with respect to 100 parts by mass of the chlorinated butyl rubber.

### <Comparative Example 5>

Besides further blending 20 parts by mass of the calcined clay with respect to 100 parts by mass of the chlorinated butyl rubber, a rubber composition was prepared in the same manner as in Comparative Example 4 and besides using this rubber composition, rubber closures for vial of the same shape and same dimensions were manufactured in the same manner as in Comparative Example 4. The total blending proportion of the two types of silica was 60 parts by mass with respect to 100 parts by mass of the chlorinated butyl rubber and the total blending proportion of the two types of silica and the calcined clay was 80 parts by mass with respect to 100 parts by mass of the chlorinated butyl rubber.

### <Example 8>

As the rubber component, 100 parts by mass of brominated butyl rubber [BROMOBUTYL 2255 manufactured by Japan Butyl Co., Ltd.] were used.

Also as the silica, synthetic silica [Nipsil EL manufactured by Tosoh Silica Corporation, wet process (precipitated) silica, BET specific surface area: 30 to 60m²/g, bulk specific gravity: 80 to 130g/liter] was used. The blending proportion of the synthetic silica was set to 15 parts by mass with respect to 100 parts by mass of the brominated butyl rubber.

The two components mentioned above and the respective components shown below in Table 3 besides the crosslinking components were blended, kneaded using a 10L closed pressurizing kneader at a filling rate of 75%, matured at room temperature, and thereafter kneaded by an open roll upon addition of the crosslinking agent to prepare a rubber composition.

### [Table 3]

**Table 3**

| Component | Part by mass |
|---|---|
| LDPE | 1 |
| Coupling agent | 0.5 |
| Synthetic hydrotalcite | 4 |
| Calcined clay | 20 |
| Sulfur based crosslinking agent | 0.3 |
| Resin crosslinking agent | 1.5 |
| Accelerator TBZTD | 0.3 |

The respective components in the table are as follows. Also, the parts by mass in the table are parts by mass with respect to 100 parts by mass of the brominated butyl rubber as the rubber component.
LDPE: HI-WAX 220P manufactured by Mitsui Chemicals, Inc.
Coupling agent: γ-mercaptopropyltrimethoxysilane
Synthetic hydrotalcite: DHT-4A (registered trademark) -2 manufactured by Kyowa Chemical Industry Co., Ltd.
Calcined clay: SATINTONE W manufactured by Engelhard Corporation
Sulfur based crosslinking agent: sulfur
Resin crosslinking agent: oligomer of alkylphenol disulfide [alkylphenol-sulfur chloride condensate, TACKIROL (registered trademark) AP manufactured by Taoka Chemical Co., Ltd.]
Accelerator TBZTD: tetrabenzyl thiuram disulfide

### <Comparative Example 6>

Besides blending the same amount of the conventional synthetic silica [Nipsil VN3 manufactured by Tosoh Silica Corporation, wet process (precipitated) silica, BET specific surface area: 180 to 230m²/g, bulk specific gravity: 30 to 60g/liter] as the silica in place of the synthetic silica, a rubber composition was prepared in the same manner as in Example 8 and besides using this rubber composition, rubber closures for vial of the same shape and same dimensions were manufactured in the same manner as in Example 8.

### <Rubber hardness measurement>

With the rubber closures manufactured in the Examples and Comparative Examples, the Shore A hardness was measured in accordance with the measurement method cited in JIS K6253-3_{:2012}.

### <Extractable substances test>

With the rubber closures manufactured in the Examples and Comparative Examples, the "Extractable Substances Test" cited in "7.03 Test for Rubber Closure for Aqueous Infusions" of the Japanese Pharmacopoeia Sixteenth Edition was performed. The conformity conditions were set as follows.
Properties of test solution: Clear and colorless.
UV transmittance : Transmittance at each of 430nm and 650nm wavelengths is not less than 99.0%.
UV absorption spectrum: Absorbance at wavelengths of 250nm to 350nm is not more than 0.20.
Foaming: Disappears within 3 minutes.
pH: Difference of pH between the test solution and a blank solution is not more than ±1.0.
Zinc: Not more than 1µg/ml.
Potassiumpermanganate reducing substances: Not more than 2.0ml/100ml.
Residue on evaporation: Not more than 2.0mg.

### <Compression set test>

Large test pieces as defined in the Japanese Industrial Standards JIS K6262:2013 "Rubber, vulcanized or thermoplastic - Determination of compression set at ambient, elevated or low temperatures" were prepared using the respective rubber compositions prepared in the Examples and Comparative Examples. The crosslinking condition was set to 10 minutes at 180°C.

Thereafter, using the large test pieces, the compression set (%) under conditions of a compression ratio of 25%, 70°C, and 22 hours was determined in accordance with method A cited in the abovementioned standards.

### <Moisture content measurement>

Each of the rubber closures manufactured in the Examples and Comparative Examples was steam-sterilized for 30 minutes at 120°C, fragmented finely after just wiping off water droplets on the surface without drying, and 0.5g thereof were weighed out precisely and used as the sample.

Thereafter, using a moisture vaporizer, the sample was dehydrated at 180°Cunder a nitrogen gas flow and the moisture leaving the sample in this process was measured using a trace moisture measuring device to perform automatic measurement of the moisture content (%) contained in the sample by the Karl-Fischer method.

Also, the moisture amount (mg/piece) with respect to single rubber closure was determined from the moisture content measurement result and the precisely weighed value of the sample.

### <Liquid leakage test>

Each of the rubber closures manufactured in the Examples and Comparative Examples was fitted onto a 10ml vial bottle with an inner mouth diameter of 12.5mm and seamed with an aluminum cap to prepare an empty vial.

Thereafter, 5ml of water were sucked by a disposable syringe barrel having an injection needle (21G × 1 1/2RB) mounted thereon, and after piercing the injection needle into the pierceable flange portion of the rubber closure and injecting the water into the vial, the entirety of the mutually connected vial and syringe barrel was weighed precisely.

Thereafter, at the same time as inverting the vial so as to position the rubber closure at the lower side, the injection needle was extracted rapidly from the rubber closure with the syringe barrel being in the pressurized state, and after wiping off water droplets attached to the injection needle and the outer side of the pierceable flange portion of the rubber closure, the entirety of the separated vial and syringe barrel was weighed precisely again and the difference with respect to the former precisely weighed value was recorded.

Five vials were prepared for each of the Examples and Comparative Examples, the above operation was performed repeatedly while exchanging the injection needle for each vial, the average value was determined as a liquid leakage amount, and whether or not liquid leakage occurred was evaluated according to the following standards.
○: The liquid leakage amount was not more than 50mg.
Δ: The liquid leakage amount exceeded 50mg but was not more than 100mg.
×: The liquid leakage amount exceeded 100mg.

### <Microparticle test (shaking method)>

With each of the Examples and Comparative Examples, twenty of the rubber closures manufactured were placed in a clean glass container, spun for 20 seconds at a rate of 3 times per second upon adding 100ml of ultrafiltered water (UF water), and then set still for 1 hour.

After then removing all rubber closures from inside the water, the microparticles in the water were counted using a light obscuration type automatic particle counter [KL-03 manufactured by Rion Co., Ltd.].

Then if all of the following standards were met a "○" evaluation was given and if any one of the standards was exceeded, a "×" evaluation was given:
(a) The number of microparticles of particle diameter not less than 2µm and less than 10µm is not more than 100 particles/10ml.
(b) The number of microparticles of particle diameter not less than 10µm and less than 25µm is not more than 10 particles/10ml.
(c) The number of microparticles of particle diameter not less than 25µm is not more than 2 particles/10ml.

The results of the above are shown in Table 4 to Table 6.

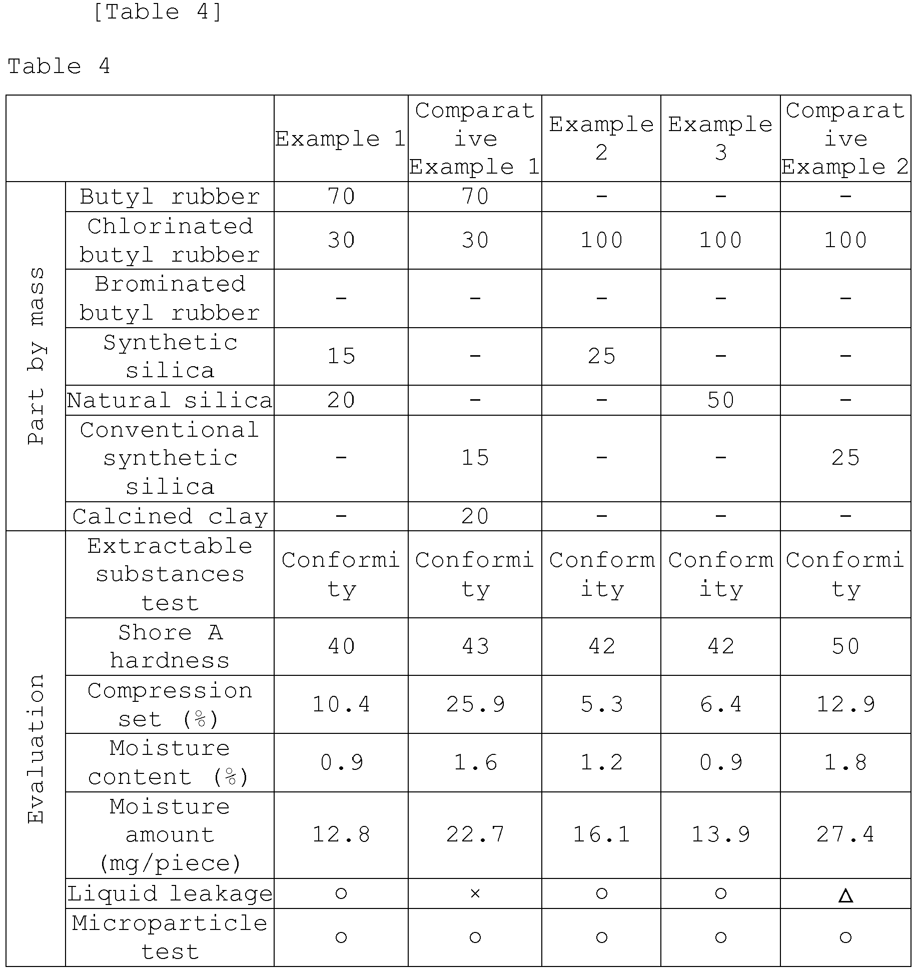

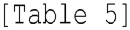

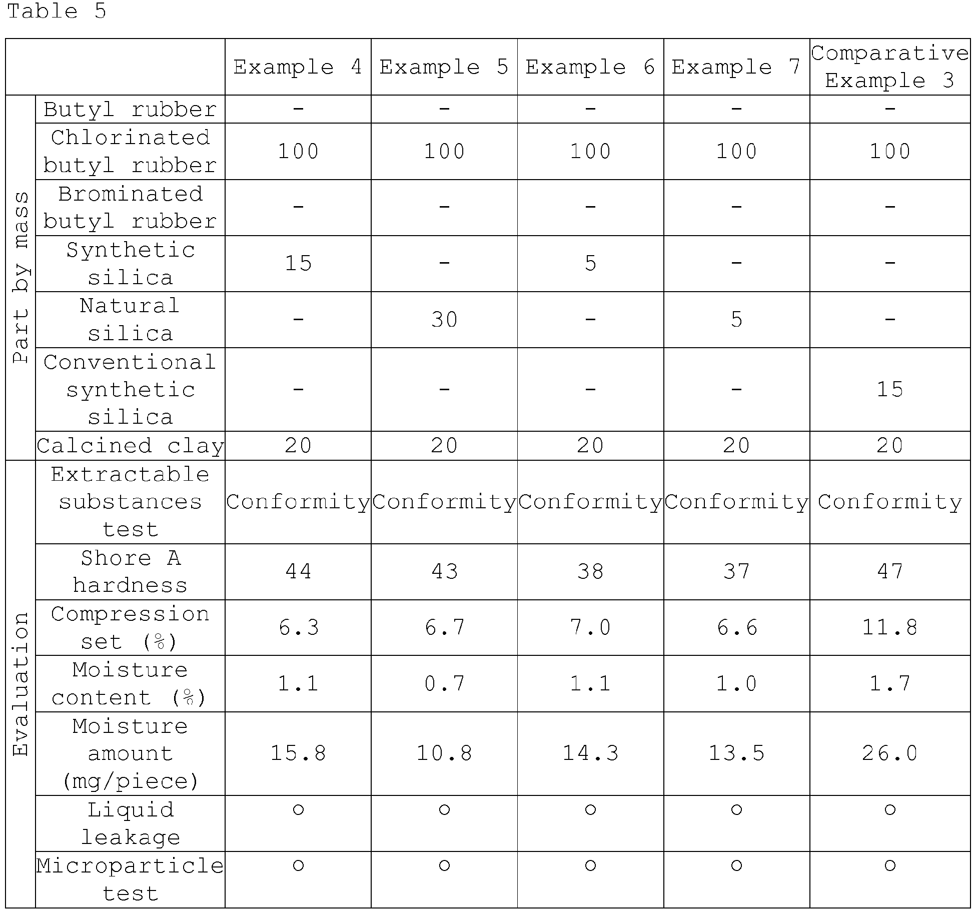

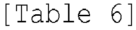

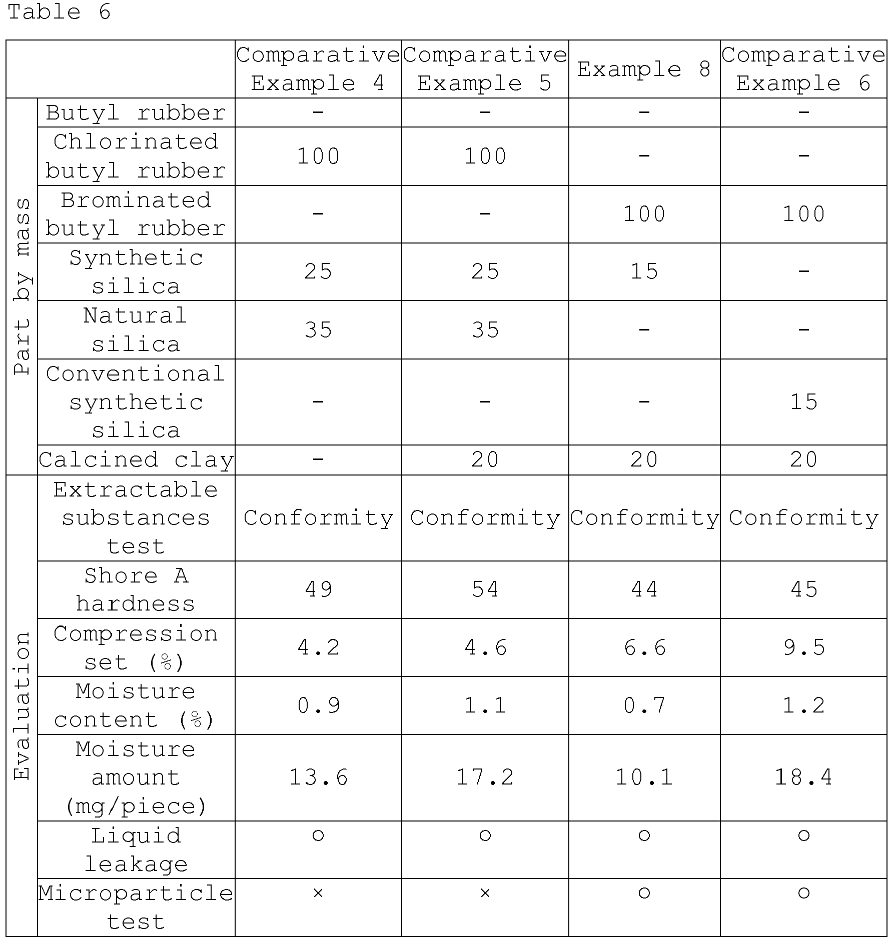

From the results of Examples 1 to 8 and Comparative Examples 1 to 3 and 6 in Table 4 to Table 6, it was found that with any of the systems using a butyl based rubber, a rubber closure that is unlikely to absorb and be permeated by moisture and is low in compression set is obtained by blending, as the silica, the synthetic or natural silica with a BET specific surface area of not less than 1m²/g and not more than 60m²/g and a bulk specific gravity of not less than 30g/liter and not more than 130g/liter in place of the conventional synthetic silica.

Also from the results of Examples 1 to 8 and Comparative Examples 4 and 5, it was found that the blending proportion of the synthetic or natural silica with respect to 100 parts by mass of the total amount of the rubber component is required to be not less than 3 parts by mass and not more than 50 parts by mass, and in the case where another filler, such as calcined clay, etc., is used in combination, the total blending proportion with respect to 100 parts by mass of the total amount of the rubber component is preferably not more than 60 parts by mass.

## Claims

1. A medical rubber part comprising a rubber composition including at least one type of rubber component, selected from the group consisting of butyl rubbers and halogenated butyl rubbers, and not less than 3 parts by mass and not more than 50 parts by mass, with respect to 100 parts by mass of the total amount of the rubber component, of silica with a BET specific surface area of not less than 1m²/g and not more than 60m²/g and a bulk specific gravity of not less than 30g/liter and not more than 130g/liter.

2. The medical rubber part according to Claim 1, wherein the rubber composition further comprises not less than 0.2 parts by mass and not more than 5 parts by mass, with respect to 100 parts by mass of the total amount of the rubber component, of a natural or synthetic hydrotalcite.

3. The medical rubber part according to Claim 1, wherein the rubber composition further comprises not less than 0.2 parts by mass and not more than 3 parts by mass, with respect to 100 parts by mass of the total amount of the rubber component, of a coupling agent.

## Patentansprüche

1. Medizinisches Kautschukteil, umfassend
eine Kautschukzusammensetzung, die mindestens einen Typ einer Kautschukkomponente enthält, ausgewählt aus der Gruppe, bestehend aus Butylkautschuken und halogenierten Butylkautschuken, und nicht weniger als 3 Massenteile und nicht mehr als 50 Massenteile, bezogen auf 100 Massenteile der Gesamtmenge der Kautschukkomponente an Siliciumdioxid mit einer spezifischen BET-Oberfläche von nicht weniger als 1 m²/g und nicht mehr als 60 m²/g und einer spezifischen Schüttdichte von nicht weniger als 30 g/Liter und nicht mehr als 130 g/Liter.

2. Medizinisches Kautschukteil nach Anspruch 1,
wobei die Kautschukzusammensetzung ferner nicht weniger als 0,2 Massenteile und nicht mehr als 5 Massenteile, bezogen auf 100 Massenteile der Gesamtmenge der Kautschukkomponente, eines natürlichen oder synthetischen Hydrotalcits umfasst.

3. Medizinisches Kautschukteil nach Anspruch 1,
wobei die Kautschukzusammensetzung ferner nicht weniger als 0,2 Massenteile und nicht mehr als 3 Massenteile, bezogen auf 100 Massenteile der Gesamtmenge der Kautschukkomponente, eines Kopplungsmittels umfasst.

## Revendications

1. Pièce médicale en caoutchouc comprenant une composition au caoutchouc incluant au moins un type de composant de caoutchouc, sélectionné parmi le groupe comprenant les caoutchoucs au butyle et les caoutchoucs au butyle halogéné, et pas moins de 3 parties en masse et pas plus de 50 parties en masse, par rapport à 100 parties en masse de la quantité totale du composant de caoutchouc, de silice avec une aire de surface spécifique BET qui n'est pas inférieure à 1 m²/g et qui n'est pas supérieure à 60 m²/g, et une densité spécifique en vrac qui n'est pas inférieure à 30 g/litre et qui n'est pas supérieure à 130 g/litre.

2. Pièce médicale en caoutchouc selon la revendication 1, dans lequel la composition de caoutchouc comprend en outre pas moins de 0,2 parties en masse et pas plus de 5 parties en masse, par rapport à 100 parties en masse de la quantité totale du composant de caoutchouc, d'un hydrotalcite naturel ou synthétique.

3. Pièce médicale en caoutchouc selon la revendication 1, dans laquelle la composition de caoutchouc comprend en outre pas moins de 0,2 parties en masse et pas plus de 3 parties en masse, par rapport à 100 parties en masse de la quantité totale du composant de caoutchouc, d'un agent de couplage.
